# EUROPEAN PATENT APPLICATION

(11) **EP 4 852 547 A1**
(43) Date of publication of application: **09.12.2026**
(21) Application number: 24926014.2
(22) Date of filing: 19.02.2024
(51) Int. Cl.: H04W 64/00, H04W 16/24, H04W 52/28

(54) **CONTROLLER, POSITIONING SYSTEM, AND CONTROL METHOD**

(71) Applicant: Softbank Corp., Tokyo 105-7529 (JP)
(72) Inventor: KOBAYASHI, Kengo, Tokyo 105-7529 (JP); ARAKI, Koji, Tokyo 105-7529 (JP)
(74) Representative: Meissner Bolte Partnerschaft mbB
(86) International application number: PCT/JP2024/005752
(87) International publication number: WO 2025/177343

(57) **Abstract**

A controller (210) according to one aspect of the present invention is a controller (210) that controls a plurality of base stations (2) each of which transmits, to a terminal device (100), a signal for network positioning with respect to the terminal device (100), the controller (210) controlling each of the plurality of base stations (2) so as to (a) carry out network positioning a plurality of times in succession and (b) change an area covered by at least one of the plurality of base stations (2) for network positioning between network positioning of a certain ordinal number and that of another ordinal number different from the certain ordinal number among the plurality of times of network positioning.

## Description

### Technical Field

The present invention relates to a controller, a positioning system, and a control method.

### Background Art

There has been known a technique (network positioning) that measures a signal strength of a signal transmitted from a base station to a terminal device and estimates a position of the terminal device on the basis of the measured signal strength. An example thereof is three-point positioning that estimates a position of a terminal device by using signals from three base stations.

Patent Literature 1 discloses a method of carrying out three-point positioning by using a plurality of antennas, so as to enable position estimation of a radio terminal.

### Citation List

### Patent Literature

Patent Literature 1
Japanese Patent Application Publication, Tokukai, No. 2023-182503

### Summary of Invention

### Technical Problem

The above-described three-point positioning is a technique according to which an intersection point is obtained on the assumption that radio waves serving as signals from base stations spread in an ideal spherical shape. The radio waves, however, may be diffracted, reflected, or attenuated. Thus, in obtaining a distance between a base station and a terminal device from a signal strength, error is likely to occur in calculation of the distance, which is disadvantageous. This problem also occurs when obtaining the distance on the basis of a period of time taken until radio waves propagating from the base station reach the terminal device.

An aspect of the present invention was made in view of the above problem, and has an objective to further improve accuracy in network positioning with respect to a terminal device.

### Solution to Problem

In order to attain the above objective, a controller according to an aspect of the present invention is a controller that controls a plurality of base stations each of which transmits, to a terminal device, a signal for network positioning with respect to the terminal device, the controller controlling each of the plurality of base stations so as to (a) carry out network positioning a plurality of times in succession and (b) change, between network positioning of a certain ordinal number and that of another ordinal number different from the certain ordinal number among the plurality of times of network positioning, an area covered by at least one of the plurality of base stations for network positioning.

In order to attain the above objective, a positioning system according to an aspect of the present invention is a positioning system including: a controller; and a plurality of base stations each of which transmits, to a terminal device, a signal for network positioning with respect to the terminal device, the controller controlling each of the plurality of base stations so as to (a) carry out network positioning a plurality of times in succession and (b) change an area covered by at least one of the plurality of base stations for network positioning between network positioning of a certain ordinal number and that of another ordinal number different from the certain ordinal number among the plurality of times of network positioning, and said at least one of the plurality of base stations changing the area covered for network positioning between network positioning of the certain ordinal number and that of said another ordinal number different from the certain ordinal number among the plurality of times of network positioning.

In order to attain the above objective, a control method according to an aspect of the present invention is a control method executed by a device that controls a plurality of base stations each of which transmits, to a terminal device, a signal for network positioning with respect to the terminal device, the control method including: controlling each of the plurality of base stations so as to (a) carry out network positioning a plurality of times in succession and (b) change an area covered by at least one of the plurality of base stations for network positioning between network positioning of a certain ordinal number and that of another ordinal number different from the certain ordinal number among the plurality of times of network positioning.

A controller according to each aspect of the present invention may be realized by a computer. In this case, the scope of the present invention also encompasses: a control program for the controller, the control program causing a computer to operate as each section (software element) included in the controller so as to realize the controller by the computer; and a computer-readable storage medium storing the control program therein.

The control program may use various machine learning methods in a process of causing the computer to operate as each section of the controller or in other processes. In this case, the program using the machine learning method may operate on the controller, or may operate on another device (e.g., an edge computer or a cloud server).

### Advantageous Effects of Invention

According to an aspect of the present invention, it is possible to further improve accuracy in network positioning with respect to a terminal device.

### Brief Description of Drawings

Fig. 1 is a view illustrating an example of a configuration of a positioning system.
Fig. 2 is a view illustrating an example of functional blocks of the positioning system.
Fig. 3 is a flowchart illustrating an example of operation of the positioning system.
Fig. 4 is a block diagram illustrating a configuration of a computer that can be used as a terminal or a server.

### Description of Embodiments

### Configuration Example

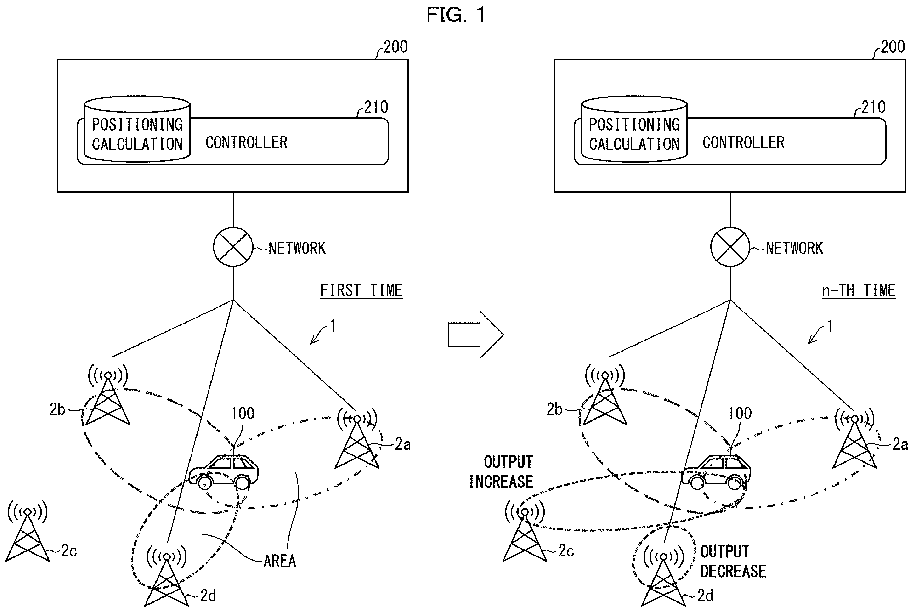

The following will explain a configuration example of the present embodiment with reference to the drawings. Fig. 1 is a view illustrating an example of a configuration of a positioning system 1 according to the present embodiment. In one example, the positioning system 1 is constituted by a terminal (i.e., a terminal device, UE) 100 and a server 200 connected to base stations (i.e., cellular base stations, actuators) 2 (2a to 2d).

The terminal 100 is wirelessly connected to the base stations 2. Assume that the terminal 100 is not fixed at specific position coordinates; however, this is not an essential configuration. In the example illustrated in Fig. 1, the terminal 100 is possessed by an occupant in a vehicle that can move at any time. The present disclosure also encompasses a configuration in which the terminal 100 is mounted on a vehicle or the like. The vehicle may be an automated guided vehicle (AGV).

The server 200 is a server capable of controlling, by a controller (RAN intelligent controller (RIC)) 210, the base stations 2 used for network positioning. Members other than the controller 210 included in the server 200 will be described later.

The server 200 dynamically controls electric power output from each base station 2 so as to change an area(s) covered by the base station(s) 2 for network positioning. In the present specification, an area covered by each base station 2 for network positioning may also simply be referred to as an "area." The area of each base station 2 may be defined separately from a cell covered for ordinary data communication. Further, the server 200 may communicate with the terminal 100 via the base stations 2, and may start network positioning in response to a request from the terminal 100.

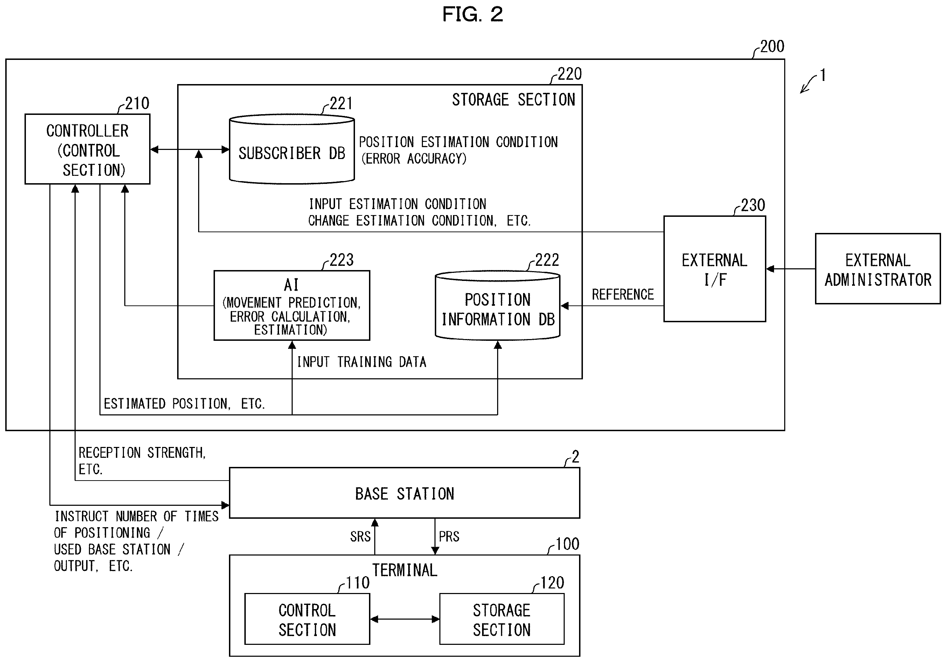

Next, with reference to another drawing, the following will give a supplementary explanation of the configuration of the positioning system 1 according to the present embodiment. Fig. 2 is a view illustrating an example of functional blocks of the positioning system 1 according to the present embodiment. Fig. 2 does not illustrate elements such as members (communication sections) via which the server 200, the base stations 2, and the terminal 100 communicate with other devices.

### Server

The server 200 includes a controller (control section) 210, a storage section 220, and an external interface (I/F) (input-output section) 230.

The controller 210 includes a control circuit that controls each section of the server 200 and each base station 2. The controller 210 may control each base station 2 in such a manner that the controller 210 refers to a subscriber database (DB) 221 and causes each base station 2 to carry out network positioning under a condition(s) for the terminal 100 that is to be subjected to network positioning. The "estimation conditions" in Fig. 2 mean the above-mentioned "condition(s)". The condition(s) may include at least one selected from the group consisting of (a) a condition relating to a frequency and the number of times of network positioning and (b) a condition relating to the number of base stations 2 used for network positioning. For example, in a case where information included in the subscriber DB 221 indicates that accuracy required for network positioning with respect to a first terminal 100 is higher than that with respect to a second terminal 100, which is different from the first terminal 100, the controller 210 may control each base station 2 so as to carry out network positioning a larger number of times in succession with respect to the first terminal 100 than with respect to the second terminal 100.

The condition(s) may be defined for each type of terminal 100. For example, in a case where the terminal 100 is a product mounted on an AGV, the controller 210 may carry out control so as to increase the frequency of network positioning.

The controller 210 may be configured such that a condition(s) for the terminal 100 that is to be subjected to network positioning may be directly specified for the controller 210 by an external manager that is a user of the server 200 via the external I/F 230. Further, the controller 210 may be configured such that a condition(s) for network positioning may be specified for the controller 210 by the terminal 100, for example, at a timing when the terminal 100 issues a request to start network positioning.

The controller 210 may be configured to change, in accordance with an output from Artificial Intelligence (AI) 223 that carries out movement prediction of the terminal 100 and error calculation (error estimation) of an estimated position, an area covered by each base station 2 for network positioning. For example, the AI 223 may predict a movement destination of the terminal 100 with reference to an estimated position of the terminal 100 at each time; alternatively, the AI 223 may identify a base station 2 that, when used for network positioning, causes an estimated position to become an outlier, and may calculate an estimated position free from error.

In a case where the terminal 100 is moving during a plurality of times of network positioning, the controller 210 may control each base station 2 so that an area covered by at least one of the base stations 2 is changed to an area corresponding to a prediction result of movement of the terminal 100. For example, the controller 210 may carry out control so as to use, for network positioning, a base station 2 located in the vicinity of a predicted movement destination of the terminal 100.

The controller 210 estimates, on the basis of information received from each base station 2, a position of the terminal 100 that is to be subjected to network positioning, and inputs the estimated position of the terminal 100 to a position information database (DB) 222 and the AI 223. For example, in a case of a configuration in which the controller 210 receives, from each base station 2, information indicative of a reception strength (signal strength) of a signal at the terminal 100, the controller 210 may calculate, from the reception strength, a distance between the base station 2 and the terminal 100, and estimate a position of an intersection point as the position of the terminal 100. Further, for example, the AI 223 may also receive, as training data, information such as an ID identifying each base station 2 and a distance between each base station 2 and the terminal 100. Furthermore, the position information DB 222 may receive an estimated position reflecting the error calculation by the AI 223.

The storage section 220 is a storage device that stores various kinds of information. The storage section 220 stores the subscriber DB 221, the position information DB 222, and/or the like. The storage section 220 includes a memory that temporarily stores information.

The subscriber DB 221 is a database that stores information relating to the terminal 100 and an owner of the terminal 100 or a person equivalent thereto. For example, the subscriber DB 221 may include information indicative of accuracy and the number of times required for network positioning with respect to each terminal 100. The term "subscriber" means a subscriber to a service that enables network positioning. However, this is not limitative.

The position information DB 222 is a database that stores information relating to the position of each terminal 100. For example, the position information DB 222 stores a history of an estimated position of each terminal 100 in such a manner that the history is associated with a date and a time.

The storage section 220 stores data for realizing the above-described AI 223 and data such as a training model used by the AI 223. In addition, the storage section 220 also stores an ID identifying each base station 2, information indicative of position coordinates of each base station 2, and/or the like.

The external I/F 230 is an interface via which the server 200 carries out input and output of information. The external I/F 230 can include a display for displaying information, a keyboard via which an external administrator inputs information, and the like. For example, the external administrator updates, on the basis of information obtained from the position information DB 222 and displayed on the display, information included in the subscriber DB 221, such as information indicative of accuracy required for network positioning with respect to each terminal 100.

### Base Station

Each base station 2 transmits, in response to an instruction from the controller 210, a signal for network positioning to the terminal 100 within the area. One example of the signal is a positioning reference signal (PRS). Meanwhile, the base station 2 receives, from the terminal 100, a signal such as a sounding reference signal (SRS) indicative of a reception strength and/or the like.

The instruction from the above-described controller 210 includes an instruction relating to the number of times of network positioning carried out a plurality of times in succession, a power output from the base station 2, and/or the like. For example, in a case where the controller 210 controls a plurality of base stations 2 simultaneously, the instruction from the controller 210 includes information specifying a base station 2 to be used for network positioning.

Each base station 2 transmits, to the controller 210, (a) an ID identifying that base station 2 and (b) information indicative of a reception strength at which the terminal 100 has received a signal from that base station 2.

Each base station 2 may be configured to calculate a distance between that base station 2 and the terminal 100 and to transmit the distance to the controller 210. The present disclosure also encompasses: a configuration in which the base stations 2 cooperate with each other so that any of the base stations 2 estimates a position of the terminal 100; and a configuration in which the terminal 100 estimates a position of the terminal 100 from position coordinates of each base station 2 and a reception strength.

### Terminal

The terminal 100 includes a control section 110 and a storage section 120.

The control section 110 includes a control circuit that controls each section of the terminal 100. For example, the control section 110 carries out (a) control to transmit an SRS to a base station 2 that is a transmission source of a PRS and (b) control to transmit, to the server 200 via the base station 2, information indicative of a request to start network positioning of the terminal 100.

The storage section 120 is a storage device that stores various kinds of information. For example, the storage section 120 may store map data including position coordinates of each base station 2.

### Operation of Positioning System

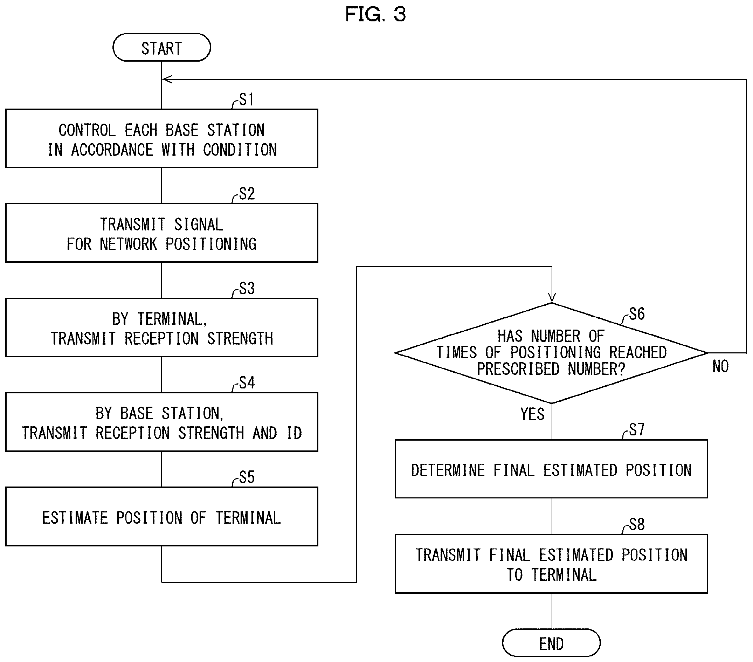

Fig. 3 is a flowchart illustrating an example of an operation of the positioning system 1 according to the present embodiment. The following will describe, with reference to the flowchart illustrated in Fig. 3, one example of a specific operation of the positioning system 1. The flowchart illustrated in Fig. 3 is started, for example, when a request to start network positioning is given from the terminal 100 to the server 200.

In S1 (step S1), the controller 210 of the server 200 refers to the subscriber DB 221 and controls each base station 2 so as to carry out network positioning in accordance with a condition(s) for the terminal 100 that is to be subjected to network positioning.

In a case where the process of step S1 is carried out after the later-described processes of S5 and S6, the controller 210 may change an area covered by each base station 2 also in accordance with an output from the AI 223. Further, the controller 210 changes an area covered by at least one of the base stations 2 every time the process of S1 is executed. That is, the controller 210 carries out a process of controlling the base stations 2 so as to (a) carry out network positioning a plurality of times in succession and (b) change an area covered by at least one of the base stations 2 for network positioning between network positioning of a certain ordinal number and that of another ordinal number different from the certain ordinal number, i.e., between network positioning of an M-th time and network positioning of an N-th time. Note that M and N are integers of 1 or more that are different from each other.

In Fig. 1, the above-described process of S1 is illustrated. Specifically, in network positioning of the first time (illustrated in the left view of Fig. 1), an output from the base station 2c for network positioning is turned off. Meanwhile, in network positioning of an N-th time (illustrated in the right view of Fig. 1), the controller 210 increases an output from the base station 2c compared with network positioning of the first time, so that an area of the base station 2c covers a position of the terminal 100. Further, the controller 210 carries out control to reduce an output from the base station 2d, thereby preventing radio waves from the base station 2d from interfering with network positioning. In this way, in a case where radio wave interference occurs, the controller 210 may control one or some of the base stations 2 to reduce their outputs. Note that network positioning does not necessarily need to be carried out by three-point positioning. In other words, the number of base stations 2 used for a single time of network positioning is not limited.

In S2, in response to an instruction from the controller 210, each base station 2 covering the terminal 100 in its area transmits a signal (e.g., a PRS) for network positioning to the terminal 100.

In S3, the terminal 100 transmits, to the base station(s) 2 serving as a transmission source(s) of the signal, a signal (e.g., an SRS) indicative of a reception strength of the signal transmitted in S2.

In S4, the base station 2 transmits, to the controller 210, an ID identifying the base station 2 itself and information indicative of the reception strength at which the terminal 100 has received the signal transmitted from the base station 2 itself.

In S5, the controller 210 of the server 200 estimates, on the basis of the information received from the base stations 2, a position of the terminal 100 that is to be subjected to network positioning. Further, the controller 210 inputs the estimated position of the terminal 100 to the position information DB 222 and the AI 223. The AI 223 carries out a calculation by using the estimated position as an input and, for example, a prediction result of movement of the terminal 100 as an output.

In S6, the controller 210 determines whether or not the number of times network positioning has been carried out with respect to the target terminal 100 has reached a number defined by the condition(s) for that terminal 100. In other words, the controller 210 determines whether or not the plurality of times of network positioning with respect to the terminal 100 have been completed.

If the controller 210 determines that the number of times of network positioning has reached the above-described number (S6: YES), the controller 210 subsequently executes the process of S7. Meanwhile, if the controller 210 determines that the number of times of network positioning has not reached the above-described number (S6: NO), the processes starting from S1 are repeated.

In S7, the controller 210 determines a single final estimated position, which is a final estimated position of the terminal 100, with reference to estimated positions of the terminal 100 respectively corresponding to the plurality of times of network positioning. For example, the controller 210 may determine a midpoint of the estimated positions as the final estimated position; alternatively, the controller 210 may determine the final estimated position by assigning a greater weight to a newer estimated position.

In S8, the controller 210 transmits the determined final estimated position to the terminal 100 via the base station(s) 2. Further, the controller 210 may input the final estimated position to the position information DB 222 and the AI 223.

The above description has discussed the control method executed by the server 200 that controls the plurality of base stations 2. According to the above-described control method, network positioning is carried out a plurality of times under different conditions; this can reduce, for example, an influence that may occur when radio waves from one or some of the base stations 2 temporarily have difficulty reaching the terminal 100. Further, on the basis of subscriber information or an instruction from the terminal 100, it is possible to dynamically adjust an output from a base station in accordance with a required estimation condition(s). This makes it possible to reduce Dilution Of Precision (DOP) in network positioning with respect to the terminal 100, thereby further improving accuracy. In addition, the configuration in which an output from a base station is dynamically adjusted in accordance with a condition(s) for each terminal 100 provides an advantage of reducing an influence of radio-wave interference with other services.

Note that the above method is applicable not only to the configuration that calculates a distance between each base station 2 and the terminal 100 on the basis of a reception strength of a signal at the terminal 100, but also to a configuration in which the distance is calculated on the basis of a response time between (a) transmission of a signal transmitted from each base station 2 to the terminal 100 and (b) return of the signal. In this configuration, either the base station 2 or the controller 210 may calculate the distance.

### Hardware Configuration and Example of Configuration Achieved by Software

The control blocks of the terminal 100 and the server 200 (particularly, the control section 110, the controller 210, etc.) can be realized by a logic circuit (hardware) provided in an integrated circuit (IC chip) or the like or can be alternatively realized by software as executed by a central processing unit (CPU). In the latter case, the server 200 may be configured by using a computer (electronic computer).

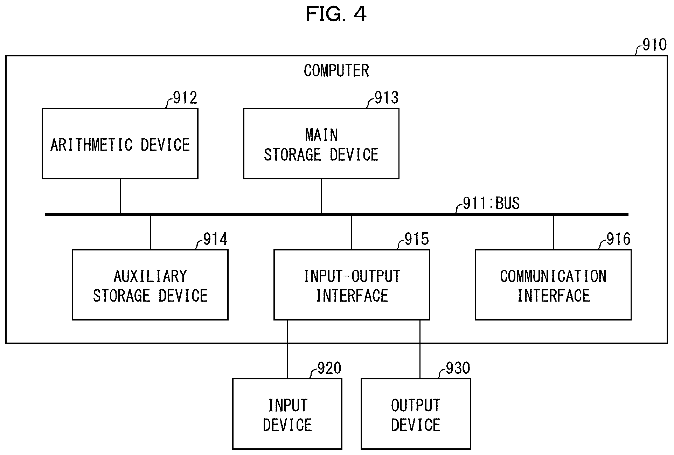

Fig. 4 is a block diagram illustrating a configuration of a computer 910 that can be used as the terminal 100, the server 200. The computer 910 includes an arithmetic device 912, a main storage device 913, an auxiliary storage device 914, and an input-output interface 915 which are connected to each other via a bus 911. Each of the arithmetic device 912, the main storage device 913, and the auxiliary storage device 914 may be, for example, a CPU, a random access memory (RAM), a solid state drive, or a hard disk drive. The input-output interface 915 is connected to (a) an input device 920 via which a user inputs various information to the computer 910 and (b) an output device 930 via which the computer 910 outputs various information to the user. The input device 920 and the output device 930 may be built in the computer 910, or may be connected (externally attached) to the computer 910. For example, the input device 920 may be a button, a keyboard, a mouse, a touch sensor, or the like, and the output device 930 may be a lamp, a display, a printer, a speaker, or the like. Further, it is possible to employ a device having functions of both the input device 920 and the output device 930, such as a touch panel constituted by a touch sensor and a display integrated together. The communication interface 916 is an interface via which the computer 910 communicates with an external device.

The auxiliary storage device 914 stores therein an information processing program for causing the computer 910 to operate as the server 200. The arithmetic device 912 loads, on the main storage device 913, the information processing program stored in the auxiliary storage device 914 and executes instructions included in the information processing program so that the computer 910 functions as each section of the server 200. Note that a storage medium used by the auxiliary storage device 914 for storing information such as the information processing program may be a computer-readable "non-transitory tangible medium", and can be, for example, a tape, a disk, a card, a semiconductor memory, a programmable logic circuit, or the like.

Such a configuration may be employed in which the computer 910 is caused to function with use of a program stored in a recording medium outside the computer 910 or a program supplied to the computer 910 via any transmission medium (e.g., a communication network or a broadcast wave). An embodiment of the present invention can also be achieved in the form of a data signal in which the program is embodied via electronic transmission and which is embedded in a carrier wave.

Further, some or all of the functions of the control blocks can be realized by a logic circuit. For example, the present invention encompasses, in its scope, an integrated circuit in which a logic circuit that functions as each of the control blocks is formed. In addition, the function of each of the control blocks can be realized by, for example, a quantum computer.

Further, each of the processes described in the above embodiments can be executed by artificial intelligence (AI). In this case, the AI may be operated by the control device or may be operated by another device (for example, an edge computer or a cloud server).

The present invention is not limited to the embodiments, but can be altered by a skilled person in the art within the scope of the claims. The present invention also encompasses, in its technical scope, any embodiment derived by combining technical means disclosed in differing embodiments.

Aspects of the present invention can also be expressed as follows:
A controller according to a first aspect of the present invention is a controller that controls a plurality of base stations each of which transmits, to a terminal device, a signal for network positioning with respect to the terminal device, the controller controlling each of the plurality of base stations so as to (a) carry out network positioning a plurality of times in succession and (b) change, between network positioning of a certain ordinal number and that of another ordinal number different from the certain ordinal number among the plurality of times of network positioning, an area covered by at least one of the plurality of base stations for network positioning.

A controller according to a second aspect of the present invention may be configured such that, in the first aspect, each of the plurality of base stations is controlled so as to carry out network positioning in accordance with a condition for the terminal device that is to be subjected to network positioning; and the condition includes at least one selected from the group consisting of (a) a condition relating to a frequency and the number of times of network positioning and (b) a condition relating to the number of base stations used for network positioning.

A controller according to a third aspect of the present invention may be configured such that, in the first or second aspect, in a case where the terminal device is moving during the plurality of times of network positioning, the controller controls each of the plurality of base stations so that an area covered by at least one of the plurality of base stations for network positioning is changed to an area corresponding to a prediction result of movement of the terminal device.

A controller according to a fourth aspect of the present invention may be configured such that, in any one of the first to third aspects, the controller determines a single final estimated position with reference to estimated positions of the terminal device, the estimated positions respectively corresponding to the plurality of times of network positioning.

A positioning system according to a fifth aspect of the present invention is a positioning system including: a controller; and a plurality of base stations each of which transmits, to a terminal device, a signal for network positioning with respect to the terminal device, the controller controlling each of the plurality of base stations so as to (a) carry out network positioning a plurality of times in succession and (b) change an area covered by at least one of the plurality of base stations for network positioning between network positioning of a certain ordinal number and that of another ordinal number different from the certain ordinal number among the plurality of times of network positioning, and said at least one of the plurality of base stations changing the area covered for network positioning between network positioning of the certain ordinal number and that of said another ordinal number different from the certain ordinal number among the plurality of times of network positioning.

A control method according to a sixth aspect of the present invention is a control method executed by a device that controls a plurality of base stations each of which transmits, to a terminal device, a signal for network positioning with respect to the terminal device, the control method including: controlling each of the plurality of base stations so as to (a) carry out network positioning a plurality of times in succession and (b) change an area covered by at least one of the plurality of base stations for network positioning between network positioning of a certain ordinal number and that of another ordinal number different from the certain ordinal number among the plurality of times of network positioning.

### Reference Signs List

1: Positioning system
2, 2a to 2d: Base station (cellular base station, actuator)
2, 2c, 2d: Base station
100: Terminal (terminal device, UE)
110: Control section
120: Storage section
200: Server
210: Controller (control section)
220: Storage section
221: Subscriber DB
222: Position information DB
223: AI
230: External I/F (input-output section)
910: Computer
911: Bus
912: Arithmetic device
913: Main storage device
914: Auxiliary storage device
915: Input/output interface
916: Communication interface
920: Input device
930: Output device

## Claims

1. A controller that controls a plurality of base stations each of which transmits, to a terminal device, a signal for network positioning with respect to the terminal device,
the controller controlling each of the plurality of base stations so as to (a) carry out network positioning a plurality of times in succession and (b) change, between network positioning of a certain ordinal number and that of another ordinal number different from the certain ordinal number among the plurality of times of network positioning, an area covered by at least one of the plurality of base stations for network positioning.

2. The controller according to claim 1, wherein:
each of the plurality of base stations is controlled so as to carry out network positioning in accordance with a condition for the terminal device that is to be subjected to network positioning; and
the condition includes at least one selected from the group consisting of (a) a condition relating to a frequency and the number of times of network positioning and (b) a condition relating to the number of base stations used for network positioning.

3. The controller according to claim 1 or 2, wherein:
in a case where the terminal device is moving during the plurality of times of network positioning, the controller controls each of the plurality of base stations so that an area covered by at least one of the plurality of base stations for network positioning is changed to an area corresponding to a prediction result of movement of the terminal device.

4. The controller according to claim 1 or 2, wherein:
the controller determines a single final estimated position with reference to estimated positions of the terminal device, the estimated positions respectively corresponding to the plurality of times of network positioning.

5. A positioning system comprising:
a controller; and
a plurality of base stations each of which transmits, to a terminal device, a signal for network positioning with respect to the terminal device,
the controller controlling each of the plurality of base stations so as to (a) carry out network positioning a plurality of times in succession and (b) change an area covered by at least one of the plurality of base stations for network positioning between network positioning of a certain ordinal number and that of another ordinal number different from the certain ordinal number among the plurality of times of network positioning, and
said at least one of the plurality of base stations changing the area covered for network positioning between network positioning of the certain ordinal number and that of said another ordinal number different from the certain ordinal number among the plurality of times of network positioning.

6. A control method executed by a device that controls a plurality of base stations each of which transmits, to a terminal device, a signal for network positioning with respect to the terminal device,
the control method comprising:
controlling each of the plurality of base stations so as to (a) carry out network positioning a plurality of times in succession and (b) change an area covered by at least one of the plurality of base stations for network positioning between network positioning of a certain ordinal number and that of another ordinal number different from the certain ordinal number among the plurality of times of network positioning.
